Europäisches Patentamt

(19) **European Patent Office**

Office européen des brevets

(11) Publication number: **0 043 996**
**B1**

(12) **EUROPEAN PATENT SPECIFICATION**

(45) Date of publication of patent specification: 28.12.83

(51) Int. Cl.³: **B 01 J 20/18,**
**B 01 D 53/04, C 07 C 7/13**

(21) Application number: **81105134.1**

(22) Date of filing: **02.07.81**

(54) Adsorption process using adsorbent agglomerates that contain zeolite.

(30) Priority: **07.07.80 US 166332**

(43) Date of publication of application:
**20.01.82 Bulletin 82/3**

(45) Publication of the grant of the patent:
**28.12.83 Bulletin 83/52**

(84) Designated Contracting States:
**BE DE FR GB IT NL**

(56) References cited:
EP - A - 0 008 424
BE - A - 873 505
DE - B - 1 149 711
US - A - 3 181 231
US - A - 3 234 147
US - A - 3 634 533
US - A - 3 751 878
US - A - 3 917 544
US - A - 3 966 644

(73) Proprietor: **UNION CARBIDE CORPORATION**
**Old Ridgebury Road**
**Danbury Connecticut 06817 (US)**

(72) Inventor: **Ambrosini, Ronald Frank**
**2844 Lexington Avenue**
**Mohegan Lake, NY 10547 (US)**
Inventor: **Ausikaitis, Joseph Paul**
**1-1 Granada Crescent**
**White Plains, NY 10603 (US)**
Inventor: **Fethke, Walter Paul, Jr.**
**69 Pine Tree Road**
**Monroe, NY 10951 (US)**
Inventor: **Sicard, Jean-Paul, N.M.I.**
**5 Butterfly Lane Box 275**
**Putnam Valley, NY 10579 (US)**

(74) Representative: **Eggert, Hans-Gunther, Dr.**
**Räderscheidtstrasse 1**
**D-5000 Köln 41 (DE)**

Courier Press, Leamington Spa, England.

# 0 043 996

Adsorption process using adsorbent agglomerates that contain zeolite.

The present invention relates generally to adsorption processes utilizing agglomerated bodies of crystalline zeolitic molecular sieves, and more particularly to improved large-scale adsorption drying processes utilizing extruded molecular sieve agglomerates having a generally trilobal cross-sectional configuration.

Commercial molecular sieve adsorption processes such as drying, desulfurization and $CO_2$ removal from feed streams are ordinarily of the dynamic type in which the feedstock gas is passed through a large fixed bed of agglomerates of the adsorbent zeolite. Such agglomerates are usually formed by blending a moist mass of zeolite crystals with a suitable binder, such as alumina, clay, silica or silica-alumina cogel and water, and shaping the resulting homogeneous mixture into the desired shape by extrusion, rolling, tabletting, accretion or other conventional forming methods. The body or agglomerate so formed is dried and activated by heating, usually at temperature in the range of 350 to 700°C.

In general it is found that a number of factors must be balanced in order to obtain efficient operation of adsorption processes. To selectively adsorb molecules from flowing gas or liquid streams, those molecules must be transferred from the fluid phase to the solid (adsorbent) phase. This transfer must be rapid and uniform throughout the adsorbent particles in order to minimize the length of the dynamic mass transfer zone in the adsorption bed, and this result is favored by small adsorbent particles. Although the process flow rate, bed configuration and other conditions affect the length of the mass transfer zone, the adsorbent particle size in the predominant factor. A decrease in the particle size, however, results in an increase in pressure drop across the adsorption bed, with a consequential increase in energy and construction material costs. Accordingly, with respect to acceptable pressure drops, there is a minimum adsorbent particle size which can be employed. Having selected the minimum particle size for a given process, it is important that the particles installed in the adsorption apparatus do not degrade in cyclic use to form smaller particles which create unacceptable pressure drops.

Heretofore a very large number of proposals have been made to increase the hydrothermal stability of adsorbent agglomerates so that particle break-up is decreased. In the main these proposals have to do with either the composition of the binder material employed, or the method for combining the zeolite crystals with the binder material. Examples of the former type are to be found in U.S.—A—3,219,590 in which kaolin-type clay combined with lignosulfonates is disclosed as an improved binder material, and in U.S.—A—3,181,231 in which the use of metal flakes as a component of the binder system is proposed. Examples of the latter type are disclosed in U.S.—A—3,234,147 and U.S.—A—3,394,989 in which a case-hardening with an alkali metal silicate and the in situ formation of the zeolite crystals in the preformed precursor particle are described, respectively. Regardless of the chemical composition or the method of formation, however, the adsorbent agglomerates were, insofar as is known, without exception dense convex shapes, particularly cylindrical solids or spheroidal beads.

It has now been surprisingly found that certain concave geometrical agglomerate adsorbent particles not only exhibit the expected suitability in adsorption performance, but also exhibit a substantial improvement in hydrothermal stability during fixed-bed cyclic adsorption-desorption operations. Although such concave configurations have been found to be advantageous as catalyst agglomerates for use in certain fixed bed hydrocarbon conversion reactors, (U.S.—A—3,966,644 issued June 29, 1976 to W.R. Gustafson) hydrothermal abuse is not a significant factor in such processes and, accordingly, the correlation between the configuration of the catalyst particle and hydrothermal stability has not been observed. Consequently it has never heretofore been proposed to utilize agglomerates of such configurations in adsorption processes in which water contacts the absorbent at some stage of the process. In fact, the higher surface-to-mass ratio of these concave particles would suggest a decrease in hydrothermal stability in comparison with a convex form having a higher bulk density such as a cylindrical form.

In the aforesaid Gustafson patent the complexities of the shape and size characteristics of the concave particles used in the present invention are discussed and defined with uncommon clarity. Portions of this disclosure are, therefore, adapted for use herein with acknowledgement.

As generally perceived, a cylinder can be defined as a solid of uniform cross-section which is generated by a straight line moving parallel to a fixed straight line and intersecting a circular curve in a plane perpendicular to the plane of the fixed straight line. The adsorbent particles of the present invention differ from the circular cylinder only in that the curve intersected by the moving straight line, i.e. the cross-sectional base, is a concave closed curve consisting of the lobes of circles, preferably of essentially equal diameter. The centers of the circular lobes are spaced apart so as to form a triangle, at least one side of which is from 0.865 to 1.0 times of the largest circle diameter, and all area occupied by the lobes and triangle is filled with constituents of the adsorbent particles. Preferably the cross-sectional base is formed of three lobes of circles of essentially equal diameter, the centers of which when connected by straight lines form essentially an equilateral triangle whose sides are from 0.865 to 1.0 times of a circle diameter. For any concave agglomerate of this invention the length is from 10 to

2

30 times the numerical value of the cross-sectional surface area of the base, both length and area being expressed in terms of a function of the same linear unit.

In the drawings:

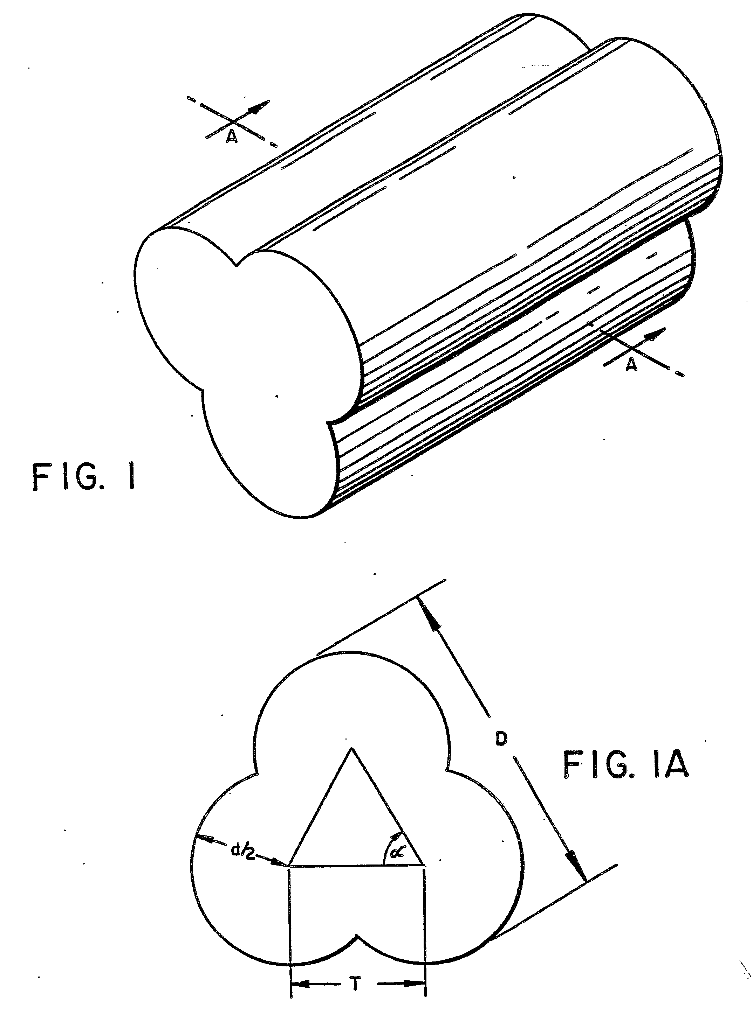

Fig. 1 is a perspective view of an adsorbent particle which has a regular three-leaf clover or trilobal cross-sectional base.

Fig. 1A is a cross-sectional end view through the plane of line A—A of Fig. 1.

Since it is not convenient hereinafter to set forth all of the critical dimensions of each trilobal agglomerate prepared or used, such agglomerates are referred to in terms of nominal size designations which correspond to the diameter of the smallest circle which circumscribes the base cross-sectional trilobe. Thus agglomerates which have nominal diameter in cm of 0.3175, 0.238 and 0.159 would have the various dimensions set forth in Table I, below. Reference letters used in the Table correspond to those appearing Fig. 1 and Fig. 1A.

TABLE I

| Measurement | Nominal Size Designation, cm. | | |
| | 0.3175 | 0.238 | 0.159 |
| --- | --- | --- | --- |
| 1. Length, L-cm | (0.953 to 1.27) | (0.716 to 0.955) | (0.457 to 0.61) |
| 2. Lobe circle, diameter, d-cm | (0.3175) | (0.238) | (0.159) |
| 3. Total cross-sectional area of trilobe-cm | 0.2245 | 0.1277 | 0.0568 |
| 4. Total surface area $A_s$ of trilobe, cm | 1.72 | 0.9684 | 0.435 |
| 5. Length T, of tri-angle side-cm | (0.274 to 0.3175) | (0.206 to 0.236) | (0.137 to 0.159) |
| 6. Maximum straight line path through trilobe cross-section, D-cm | (0.64) | (0.478) | (0.305) |
| 7. Angle $\alpha$, degrees | 60 | 60 | 60 |

Neither the chemical composition nor the method of preparation of the trilobe agglomerates of the present invention are critical factors since the improvement in hydrothermal stability appears to be solely a function of the trilobe configuration. This is not to say, however, that all agglomerates regardless of composition and method of manufacture will have the same attrition resistance under hydrothermal abuse. Rather each will be improved compared to agglomerates otherwise identical except that their configuration is convex. In general the agglomerates comprise crystals of at least one species of molecular sieve zeolite having pores at least 3 Angstroms in diameter and a binder material which comprises an inert refractory inorganic oxide such as silica, alumina, magnesia, titania or, preferably, a clay such as kaolin, attapulgite, montmorillonite and the like, which are well known in the art of forming adsorbent zeolite agglomerates. Preferred zeolites are those commonly known as 3A, 4A, 5A and 13X but any of the numerous other synthetic and natural zeolites such as mordenite, acid-treated mordenite and chabazite can be used.

The procedure for preparing the trilobe agglomerates of the present invention comprises any of the methods well known in the art but preferably involves intimately blending the various constituents with sufficient water to form a plastic formable mass, forming agglomerates into the trilobal configuration, and calcining the agglomerates thus formed at a temperature of from about 600°C to 700°C for a period of 1/2 to 1 hour. A preferred sequence of preparation comprises mulling the ingredients for about 1 to 3 hours to achieve a final moisture content in the mull cake of from 39.5 to 41.0 weight-percent, based on the weight of the dehydrated product after calcination at 1000°C for 1 hour. The mull cake is then extruded, using the trilobe-shaped die orifice, chopping the extrudate into approximately 0.64 cm lengths, and thereafter drying the trilobe bodies at a temperature of from 100 to 350°C for about 5 minutes and then firing at 625 to 700°C for about 0.5 hour. Typical embodiments of the preparative process are set forth in the Examples hereinafter appearing.

The hydrothermally abusive adsorption separation or purification processes which are improved by the use of the above-described trilobe particles can be any carried out in a fixed-bed in which water, either in the liquid or the vapor phase, contacts the adsorbent particles at a temperature in excess of about 100°C during at least one of the cyclic process steps which include (a) adsorption, wherein at least one constituent of a fluid stream passing over the adsorbent is effectively removed from said stream by selective adsorption on the adsorbent; (b) void-space purging, wherein unadsorbed material in the bed void space is forced from the adsorbent bed by displacement with another fluid; and (c) desorption, wherein fluid molecules adsorbed in the intracrystalline cavities of the zeolite crystals of the adsorbent particles are desorbed by the establishment of a substantially non-equilibrium state between the adsorbed phase and the atmosphere over the adsorbent particles. It is immaterial whether the water is a constituent of the primary fluid stream being treated, a purge fluid stream used in void-space purging or desorption, or whether the water is formed *in situ* in the adsorption bed by reaction between two or more constituents of any fluid stream passed cyclically through the adsorbent bed, particular examples of processes which advantageously utilize the trilobal adsorbent particles of this invention are drying of natural gas streams, desulfurization of natural gas streams which contain molecular oxygen and therefor produce water *in situ* in the bed by reaction with hydrocarbon molecules of the feedstock or purge gas, cracked gas drying, ethylene drying and the sweetening of hydrocarbon steams which contain $CO_2$ in addition to $H_2S$ wherein the adsorbent is maintained with a small level loading of adsorbed water to suppress the catalytic activity of the zeolite toward the formation of COS by the reaction of $CO_2$ and $H_2S$. In the drying of natural gas streams, water vapor is a constituent of the fluid mixture passed through the adsorbent bed and is present as an adsorbate which is normally desorbed during bed regeneration at a temperature of from 100°C to 400°C. Many other processes of these kinds will be obvious to those skilled in the art.

A method for preparing the trilobate adsorbent particles useful in the present processes and also the test data obtained from carrying out simulated adsorption processes therewith are set forth in the following examples.

Example 1:
Preparation of the trilobal adsorbent (3A)

(a) A quantity of zeolite 3A filler cake containing 7258 grams of water-free solids and 4621 grams of free water was placed in a mulling apparatus. To this was added 1650 grams of attapulgus clay (containing an additional 335 grams of adsorbed water), 136 grams of ligno-sulfonate, and 90.7 grams of extrusion aid. The combined ingredients were then mulled for 16 minutes. Thereafter, an additional 1300 grams of water was added and mulling continued for another 30 minutes. At the end of this 30-minute mulling period 272.2 grams of glass fibers (equivalent spherical diameter = 20 $\mu$m; aspect ratio = 15) were added slowly to the contents of the muller, with the mulling procedure continuing over the course of addition of fibers. Mulling was carried on for another 30 minutes after addition of the fibers was complete. The mulled composition, having a volatiles content of 40.4% by weight as determined by ignition at 1000°C, was removed from the muller and immediately divided into 3 equal weight portions of 4990 grams each. One of these portions was placed in a 7,62 cm diameter auger extruder and forced through a die containing 80 capillaries, each of which was 0,64 cm long and that the cross-sectional area in the shape of a trilobe. The portion of mix passed through the die at an overall rate of 3400 gms/min. at a temperature within the range of 38° to 66°C.

(b) Similarly, a second portion was forced through the same extruder, but with a standard 0.32 cm diameter capillary die. The third portion was forced through a standard 0,16 cm diameter capillary die.

Each of the three extrudate continuums was chopped into lengths of approximately 0,64 cm, dried in air at 100°C and calcined in air in a rotary indirect-fired kiln at 675°C.

Example 2:
Preparation of the trilobal adsorbent (4A)

(a) A quantity of zeolite Type 4A filter cake contianing 7076 gms of water-free solids and 5515 gms of free water was placed in a mulling apparatus. To this was added 2334 gms of Avery clay containing an additional 338 gms of adsorbed water and 22.7 gms of extrusion aid. The combined ingredients were then mulled for 15 minutes thereafter, an additional 800 gms of water was added and mulling continued for another 60 minutes. The mulled composition, having a volatiles content of 39.6% by weight as determined by ignition at 1000°C was removed from the muller and immediately divided into 3 equal portions of 5249 gms each. One of these portions was placed in a 7,62 cm diameter auger extruder and forced through a die containing 80 capillaries, each of which was 1,27 cm long and had the cross-sectional area in the shape of a trilobe. The portion of mix passed through the die at an overall rate of 3860 gms/min. at a temperature within the range of 38° to 66°C.

(b) Similarly, the two remaining portions were extruded on the same extruder but through standard 0,32 cm and 0,16 cm diameter capillary dies, each 1,27 cm thick.

Each of the three extrudate continuums was chopped into length of approximately 0,64 cm, dried in air at 100°C, and calcined in air in a rotary indirect-fired kiln at 625°C.

### Example 3:

Preparation of the trilobal adsorbent (5A)

(a) A quantity of zeolite Type 5A filter cake containing 7076 gms of water-free solids and 2008 gms of free water was placed in a mulling apparatus. To this was added 2334 gms of Avery clay containing an additional 338 gms of adsorbed water and 90.7 gms of extrusion aid.

The combined ingredients were then mulled for 15 min. Thereafter, an additional 3035 gms of water was added and mulling continued for another 60 min. The mulled composition, having a volatiles content of 40.3% by weight as determined by ignition at 1000°C, was removed from the muller and immediately divided into 3 equal weight portions of 4848 gms each. One of these portions was placed in a 7,62 cm diameter auger extruder and forced through a die containing 80 capillaries, each of which was 1,27 cm long and had the cross-sectional area in the shape of a trilobe. The portion of mix passed through the die at an overall rate of 1816 gms/min at a temperature within the range of 38° to 66°C.

(b) Similarly the two remaining portions were extruded on the same extruder but through standard 0.32 cm (1/8") and 0.16 cm diameter capillary dies, each 1,27 cm thick.

Each of the three extrudate continuums was chopped into lengths of approximately 0,64 cm, dried in air at 100°C, and calcined in air in a rotary indirect-fired kiln at 625°C.

### Example 4:

Preparation of the trilobal adsorbent (13X)

(a) A quantity of zeolite Type 13X filter cake containing 7076 gms of water-free solids and 5873 gms of free water was placed in a mulling apparatus. To this was added 2334 gms of Avery clay (containing an additional 338 gms of adsorbed water) and 272 gms of extrusion aid.

The combined ingredients were then mulled for 15 minutes. At the end of the 15-minute period, no additional water was necessary and the mix was mulled for an additional 60 minutes. The mulled composition, having a volatiles content of 41.8% by weight as determined by ignition at 1000°C, was removed from the muller and immediately divided into 3 equal weight portions of 5185 gms each. One of these portions was placed in a 7,62 cm diameter auger extruder and forced through a die containing 80 capillaries, each of which was 1,27 cm long and had the cross-sectional area in the shape of a trilobe. The portion of mix passed through the die at an overall rate of 2815 gms/min at a temperature within the range of 38° to 66°C.

(b) Similarly, the two remaining portions were extruded on the same extruder but through standard 0,32 cm and 0,16 cm diameter capillary dies, each 1,27 cm thick.

Each of the three extrudate continuums was chopped into lengths of approximately 0,64 cm, dried in air at 100°C, and calcined in air in a rotary indirect-fired kiln at 625°C.

### Hydrothermal Stability

As used herein, the cyclic hydrothermal stability of the involved agglomerates is measured in terms of the percentage of test agglomerates which are broken when subjected to simulated hydrothermal service. The test employs 200 grams of shaped agglomerates. Before being charged to a fixed adsorption bed, the sample is screened to remove any particles smaller than 2,83 mm (7 mesh U.S. Standard). The feed to the bed is a steam-air mixture from which any entrained water is removed by a demister. The operating conditions are as follows:

| | |
|---|---|
| Adsorption temperature, °C | 32,2 |
| Desorption temperature, °C | 249 |
| Adsorption flow rate, std.m³/min | 13.5 |
| Desorption flow rate, " | 3.5 |
| Water concentration in feed, parts per million (ppm) (vol.) | 4500 |
| Weight of packed bed, grams | 200 |
| Bed length, cm | 20.32 |
| Bed diameter, cm | 4.5 |
| Adsorption time, minutes (downflow) | 45 |
| Desorption time, minutes (downflow) | 45 |

There is no provision for a separate cooling step. The regenerated beds are cooled to the adsorption temperature of 32,2°C as part of the 45-minute adsorption cycle. After the sample has undergone 50 cycles in the manner described above, the sample is allowed to remain in the unit for 1—1.5 hours on an adsorption step. Next, the sample is removed from the unit and is again screened on a screen having openings of about 2,83 mm (7 mesh U.S. Standard) to separate any broken-up material. Both the latter fraction (smaller than 2,83 mm) and the retained (larger than 2,83 mm) fraction are weighed. The percent breakup is:

$$\frac{\text{Weight of particles smaller than 2,83 mm}}{\text{Weight of initial sample (hydrated)}} \times 100$$

The sample retained on the screen is returned to the test unit. After 150 cycles the sample is evaluated in the same manner. Each "150-cycle break-up" value reported hereinafter is the sum of the individual percentages measured after 50 and 150 cycles.

Example 5:

Using the hydrothermal stability test described above, samples of extruded trilobal particles as prepared in Examples 1—4 supra and, having nominal cross-sectional diameters of 0,159 cm and 0,32 cm inch respectively, were compared with extruded right circular cylindrical particles of the same chemical composition and having diameters of 0,159 cm and 0,32 cm respectively. The results are set forth in tabular form below:

TABLE II

| Sample | Zeolite Constituent | Particle Configuration | Particle Diameter, cm | Number of Test Cycles | Cyclic Break-up % |
|---|---|---|---|---|---|
| (a) | 3A | Cylindrical | 0.32 | 50 | 0.9 |
| | " | " | 0.32 | 150 | 2.9 |
| (b) | 3A | " | 0.159 | 50 | 5.9 |
| | " | " | 0.159 | 150 | 11.2 |
| (c) | 3A | Trilobal | 0.159 | 50 | 0.9 |
| | " | " | 0.159 | 150 | 2.4 |
| (d) | 4A | Cylindrical | 0.32 | 50 | 0.4 |
| | " | " | 0.32 | 150 | 0.9 |
| (e) | 4A | " | 0.159 | 50 | 2.1 |
| | " | " | 0.159 | 150 | 5.1 |
| (f) | 4A | Trilobal | 0.159 | 50 | 0.4 |
| | " | " | 0.159 | 150 | 1.9 |
| (g) | 5A | Cylindrical | 0.32 | 50 | 0.5 |
| | " | " | 0.32 | 150 | 1.6 |
| (h) | 5A | " | 0.159 | 50 | 4.4 |
| | " | " | 0.159 | 150 | 5.0 |
| (i) | 5A | Trilobal | 0.159 | 50 | 0.5 |
| | " | " | 0.159 | 150 | 1.1 |

TABLE II (continued)

| Sample | Zeolite Constituent | Particle Configuration | Particle Diameter, cm | Number of Test Cycles | Cyclic Break-up % |
|---|---|---|---|---|---|
| (j) | 13X | Cylindrical | 0.32 | 50 | 0.4 |
| | " | " | 0.32 | 150 | 0.6 |
| (k) | 13X | " | 0.159 | 50 | 1.4 |
| | " | " | 0.159 | 150 | 1.9 |
| (l) | 13X | Trilobal | 0.159 | 50 | 0.5 |
| | " | " | 0.159 | 150 | 1.5 |

As is readily apparent from the data of Table II, hydrothermal stability tends to increase with increasing particle size regardless of the configuration of the particle. Thus after 150 cycles the 0.32 cm cylindrical particles containing the 3A zeolite exhibited hydrothermally induced break-up of only 2.9% compared with 11.2% for the 0.159 cm inch cylindrical particles. The 0.159 cm inch trilobal particle, however, proved more resistant to break-up than the 0.32 cm inch cylindrical particle. Similar results are observed in the case of the trilobal particles containing other zeolite species.

**Claims**

1. A process for separating a fluid mixture of molecular species based on the preference of their individual adsorbability on adsorbent particles containing zeolitic molecular sieves which comprises passing said mixture through a fixed adsorption bed containing said adsorbent particles, said bed cyclically undergoing the stages of:

(a) adsorption, wherein at least one constituent of a fluid stream passing over the adsorbent is effectively removed from said stream by selective adsorption on the adsorbent;

(b) void-space purging wherein unadsorbed material in the bed void space is forced from the adsorbent bed by displacement with another fluid; and

(c) desorption, wherein fluid molecules adsorbed in the intracrystalline cavities of the zeolite crystals of the adsorbent particles is desorbed by the establishment of a substantially non-equilibrium state between the adsorbed phase and the atmosphere over the adsorbent particles;

and wherein water contacts the adsorbent at a temperature in excess of about 100°C up to the crystal destruction temperatures of the zeolite thereof during at least one of the said stages (a), (b) and (c);

the improvement which comprises utilizing as the adsorbent particles molecular sieve agglomerates which are solid and nominally cylindrical in shape and having as the cross-sectional base a concave closed curve consisting of three lobes of circles, the centers of said circular lobes being spaced apart so as to form a triangle, at least one side of which is from 0.865 to 1.0 times of the largest circle diameter, and having a length the numerical value of which is from 10 to 30 times the numerical value of the cross-sectional surface area of the base, both length and area being expressed in terms of a function of the same linear unit.

2. Process according to claim 1 wherein the cross-sectional base of the adsorbent particles consist of three lobes of circles essentially equal in diameter, the centres of said circular lobes being spaced apart so as to form an essentially equilateral triangle whose sides are 0.865 to 1.0 times the diameter of said circles.

3. Process according to claim 2 wherein the adsorbent particles contain zeolite 3A as the principal adsorbent constituent.

4. Process according to claim 2 wherein the adsorbent particles contain zeolite 4A as the principal adsorbent constituent.

5. Process according to claim 2 wherein the adsorbent particles contain zeolite 5A as the principal adsorbent constituent.

6. Process according to claim 2 wherein the adsorbent particles contain zeolite 13X as the principal adsorbent constituent.

7. Process according to claim 2 wherein water vapor is a constituent of the fluid mixture passed

7

through said adsorption bed and is present as an adsorbate to be desorbed in stage (c) at a temperature of from 100 to 400°C.

8. Process according to claim 7 wherein the fluid mixture comprises water-containing natural gas.

9. Process according to claim 7 wherein the fluid mixture comprises water vapor and ethylene.

## Revendications

1. Procédé pour séparer un mélange fluide d'espèces moléculaires sur la base de la préférence de leur aptitude individuelle à être adsorbées sur des tamis moléculaires zéolitiques contenant des particules adsorbantes, qui consiste à faire passer ledit mélange à travers un lit fixe d'adsorption contenant lesdites particules adsorbantes, ledit lit étant soumis périodiquement aux opérations de:

(a) adsorption, dans laquelle au moins un constituant d'un courant fluide passant sur l'adsorbant est éliminé efficacement dudit courant par adsorption sélective sur l'adsorbant;

(b) purge de l'espace interstitiel dans laquelle la matière non adsorbée se trouvant dans l'espace interstitiel du lit est expulsée à force du lit adsorbant par déplacement par un autre fluide; et

(c) désorption dans laquelle des molécules de fluide adsorbées dans les cavités intracristallines des cristaux de zéolite des particules adsorbantes sont désorbées par l'établissement d'un état de sensiblement non-équilibre entre la phase adsorbée et l'atmosphère sur les particules adsorbantes;

et dans lequel de l'eau est mise en contact avec l'adsorbant à une température supérieure à environ 100°C et pouvant atteindre la température de destruction du cristal de la zéolite de l'adsorbant pendant au moins l'une desdites étapes (a), (b) et (c);

le perfectionnement consistant à utiliser, comme particules adsorbantes, des agglomérats de tamis moléculaires qui sont solides et ont une forme nominale cylindrique et, comme base de section, une courbe fermée concave constituée de trois lobes de cercles, les centres desdits lobes circulaires étant espacés les uns des autres afin de former un triangle dont au moins un côté est compris entre 0,865 et 1,0 fois le diamètre du plus grand cercle, et ayant une longueur dont la valeur numérique est comprise entre 10 et 30 fois la valeur numérique de l'aire de la surface de la section de la base, la longueur et l'aire étant exprimées en termes d'une fonction de la même unité linéaire.

2. Procédé selon la revendication 1, dans lequel la base de la section des particules adsorbantes comprend trois lobes de cercles de diamètres essentiellement égaux, les centres desdits lobes circulaires étant espacés afin de former un triangle essentiellement équilatéral dont les côtés sont compris entre 0,865 et 1,0 fois le diamètre desdits cercles.

3. Procédé selon la revendication 2, dans lequel les particules adsorbantes contiennent de la zéolite 3A comme constituant adsorbant principal.

4. Procédé selon la revendication 2 dans lequel les particules adsorbantes contiennent de la zéolite 4A comme constituant adsorbant principal.

5. Procédé selon la revendication 2, dans lequel les particules adsorbantes contiennent de la zéolite 5A comme constituant adsorbant principal.

6. Procédé selon la revendication 2 dans lequel les particules adsorbantes contiennent de la zéolite 13X comme constituant adsorbant principal.

7. Procédé selon la revendication 2 dans lequel de la vapeur d'eau est un constituant du mélange fluide passant à travers ledit lit d'adsorption et est présente en tant qu'adsorbat devant être désorbé dans l'étape (c) à une température de 100 à 400°C.

8. Procédé selon la revendication 7 dans lequel le mélange fluide comprend un gaz naturel contenant de l'eau.

9. Procédé selon la revendication 7 dans lequel le mélange fluide comprend de la vapeur d'eau et de l'éthylène.

## Patentansprüche

1. Verfahren zum Trennen eines fließenden Gemisches von Molekülarten durch die Bevorzugung ihrer jeweiligen Adsorbierbarkeit an Adsorberteilchen, die Molekularsiebe enthalten, wobei die genannten Mischung durch ein festes Adsorptionsbett geleitet wird, das diese Adsorberteilchen enthält, und wobei das Bett in einem Zyklus den folgenden Stufen unterworfen wird:

(a) Adsorption, bei der wenigstens ein Bestandteil des über den Adsorber geleiteten fließenden Stroms durch selektive Adsorption an dem Adsorbens wirksam aus diesem Strom entfernt wird;

(b) Spülen des Leerraums, wobei nicht adsorbierte Substanz im leeren Raum des Bettes aus dem Adsorberbett durch Ersatz mit einem anderen fliessenden Medium ausgetrieben wird und

(c) Desorption, wobei die in den interkristallinen Hohlräumen der Zeolithkristalle der Adsorberteilchen adsorbierten Moleküle des fließenden Mediums durch Schaffung eines beträchtlichen Ungleichgewichtszustands zwischen der adsorbierten Phase und der Atmosphäre über den Adsorberteilchen desorbiert werden;

und wobei Wasser mit dem Adsorbens während wenigstens einer der genannten Stufen (a), (b) und (c) bei einer Temperatur über etwa 100°C bis zur Kristallzerstörungstemperatur des Zeolithen in Berührung gebracht wird;

gekennzeichnet durch die Verbesserung, die die Verwendung von Molekularsiebagglomeraten als Adsorberteilchen einschließt, die fest sind, nominell zylindrische Form haben, als Querschnittsfläche eine konkave geschlossene Kurve aus drei Kreisbögen besitzen deren Mittelpunkte räumlich im Abstand zu einem Dreieck angeordnet sind, von dem wenigstens eine Seite das 0,865 bis 1,0-fache des größten Kreisdurchmessers beträgt und die eine Länge haben, deren Wert das 10- bis 30-fache des Zahlenwerts der Querschnittsfläche der Basis beträgt, wobei beide Längen und Flächen als Funktion der gleichen Längeneinheit ausgedrückt sind.

2. Verfahren nach Anspruch 1, bei dem die Querschnittsgrundfläche der Adsorberteilchen aus drei Kreisbögen von im wesentlichen gleichen Durchmesser besteht, deren Mittelpunkte so voneinander entfernt sind, daß sie ein im wesentlichen gleichseitiges Dreieck bilden, dessen Seiten das 0,865- bis 1,0-fache des Durchmessers der Kreise betragen.

3. Verfahren nach Anspruch 2, bei dem die Adsorberteilchen Zeolith 3A als hauptsächlichen Adsorberbestandteil enthalten.

4. Verfahren nach Anspruch 2, bei dem die Adsorberteilchen Zeolith 4A als hauptsächlichen Adsorberbestandteil enthalten.

5. Verfahren nach Anspruch 2, bei dem die Adsorberteilchen Zeolith 5A als hauptsächlichen Adsorberbestandteil enthalten.

6. Verfahren nach Anspruch 2, bei dem die Adsorberteilchen Zeolith 13X als hauptsächlichen Adsorberbestandteil enthalten.

7. Verfahren nach Anspruch 2, bei dem Wasserdampf ein Bestandteil des durch das Adsorptionsbett geleiteten fließendes Gemisches ist und als Adsorbat vorliegt, das in der Stufe (c) bei einer Temperatur von 100 bis 400°C desorbiert werden soll.

8. Verfahren nach Anspruch 7, bei dem das fließende Gemisch wasserhaltiges Erdgas enthält.

9. Verfahren nach Anspruch 7, bei dem das fließende Gemisch Wasserdampf und Äthylen enthält.

0 043 996

FIG. 1

FIG. 1A

1